# EUROPEAN PATENT SPECIFICATION

(11) **EP 0 342 235 B1**
(45) Date of publication and mention of the grant of the patent: **08.09.1999**
(21) Application number: 88902222.4
(22) Date of filing: 27.02.1988
(51) Int. Cl.: B29C 45/67, B22D 17/26

(54) **CLAMPING MECHANISM OF INJECTION MOLDING MACHINES**
FESTHALTEMECHANISMUS FÜR EINSPRITZGIESSVORRICHTUNG
MECANISME DE SERRAGE POUR MACHINES DE MOULAGE PAR INJECTION

(30) Priority: 27.02.1987 JP 4543387
(43) Date of publication of application: 23.11.1989
(73) Proprietor: Aoki, Shigeto, Hanishina-gun Nagano-ken (JP)
(72) Inventor: AOKI, Katashi, deceased (JP)
(74) Representative: Twelmeier, Ulrich, Dipl.Phys.
(86) International application number: PCT/JP88/00217
(87) International publication number: WO 88/06513

(56) References cited:
- EP-A- 0 309 584
- DE-C- 3 238 111
- FR-A- 2 258 949
- FR-A- 2 494 628
- JP-A- 60 143 915

## Description

### FIELD OF THE ART

This invention relates to a clamping mechanism in an injection molding machine which is used to mold synthetic resins.

### BACKGROUND

As means for reducing a hydraulic resistance during opening and closing a mold, a clamping mechanism has been known from Japanese Patent Application Laid-Open No. 60-143915 in which an internal diameter of a front chamber of a cylinder is formed to be larger than an internal diameter of a rear chamber of the cylinder, and a pressure-oil flowing clearance is formed between the peripheral wall of the rear chamber of the cylinder and a piston.

In the above-described clamping mechanism, the hydraulic resistance within the cylinder is reduced by the provision of the flowing clearance in the periphery of the piston, but a large quanity of pressure oil is required when a clamping ram is moved at high speeds, and since in a conventional pipe, its inlet and outlet for pressure oil is small in diameter, there gives rise to a problem in that in case of a large clamping mechanism, flowing-in-and-out of pressure oil during opening and closing of a mold lacks in smoothness, and high-speed opening and closing cannot be carried out.

In view of the foregoing, the present inventor has developed means as disclosed in Japanese Patent Application No. 61-276185 previously filed, in which a front chamber of a cylinder and a rear chamber of the cylinder are communicated with each other through a large-diameter passage, a hydraulic circuit is connected to the rear chamber side of the cylinder of said passage and the front chamber side of the cylinder of the passage can be opened and closed by a valve, whereby pressure oil of the front chamber of the cylinder during opening and closing of a mold can be moved to the rear chamber of the cylinder through the passage, and even if a quantity of movement of pressure oil increases with the large-size of the clamping mechanism, the flowability of pressure oil is not impaired by the pipe resistance and the high-speed opening and closing can be carried out smoothly.

By the means as described above, a trouble in flowing-in-and-out of pressure oil due to the pipe resistance has been obviated and the opening and closing of a mold has been made higher in speed than prior art, whilst a supply of pressure oil within the cylinder tends to be short by the high speed movement of the piston and a cavitation became liable to occur in the back of the piston, as a consequence of which there occurs the need to solve a new problem in that it takes time to increase pressure at the time of powerful clamping.

While a short in the supply of pressure oil when a mold is closed can be solved by the provision of the supplying tank as in prior art, the operation of a valve opened and closed according to the movement of the piston is difficult, and in addition, the valve is complicated in construction and tends to produce a trouble.

FR-A-2494628 shows a clamping mechanism which has two charge cylinders being parallelly mounted to a clamping cylinder. The charge cylinders communicate with the front chamber of the cylinder. They are provided with a piston rod operatively connected to the clamping ram of the clamping cylinder. A portion of the pressure oil is charged from the charge cylinders into the clamping cylinder during closing of the mold. The oil displaced by the movement of a piston in the clamping cylinder flows through the piston via a transfer conduit. A portion of the pressure oil is returned to a reservoir via a pipe. The transfer conduit can be closed by an annual piston working as a valve. Such a small-diameter transfer conduit has a high flow resistance for the pressure oil and therefore quick and smooth flow of the pressure oil from the front chamber to the rear chamber of the pressure cylinder is impossible.

### DISCLOSURE OF THE INVENTION

It is an object of this invention to provide an improved and new clamping mechanism which can charge a part of pressure oil within a cylinder according to a movement of a piston without requiring the operation, and which requires no particular power or operation to charge pressure oil.

For achieving the aforesaid object, this invention overcomes the above-described problems encountered in prior art by the provision of a clamping mechanism comprising a clamping cylinder in which an internal diameter of a rear chamber of a cylinder is formed to be larger than an internal diameter of a front chamber of the cylinder, and a flowing clearance is formed between a peripheral wall of the rear chamber of the cylinder and a piston, and said piston having an external diameter adapted for the front chamber of the cylinder and having a front portion and a rear portion with a clamping ram and a booster ram made to be coaxial with each other, the improvement wherein a charge cylinder provided with a piston rod operatively connected to the clamping ram is provided parallel with the clamping ram on the side of said clamping cylinder, said charge cylinder being communicated with the front chamber of the cylinder, said charge cylinder having a charge area formed to be smaller than an end area of the clamping ram in the back of the piston, and a part of pressure oil within the cylinder is charged into said charge cylinder according to the movement of the clamping ram.

In such a clamping mechanism, pressure oil flows into the cylinder chamber on the pressurized side from the flowing clearance as the piston moves. The high-speed withdrawal (mold opening) of the clamping ram is effected by the booster ram, at which time, a part of the pressure oil within the clamping cylinder is sucked into the charge cylinder. The high-speed advance (mold closing) is effected by pressure oil supplied into the cylinder via a passage and presssure oil from the charge cylinder, at which time oil pressure exerts on both surfaces of the piston, but since the outside diameter of the booster ram is smaller than the clamping ram, a pressure receiving surface of the back of the piston is larger than the front surface by an end area of the clamping ram, and the high-speed mold closing is effected by a differential pressure generated thereat.

Furthermore, since the charge area of the charge cylinder is formed to be smaller than the end area of the clamping ram to provide a difference of area therebetween, hydraulic resistance is not generated in the charge cylinder, and pressure oil in the charge cylinder is discharged into the clamping cylinder. Moreover, the front end of the piston comes into contact with the front chamber of the cylinder, and the rear chamber of the cylinder is partitioned from the front chamber of the cylinder by the piston, after which pressure oil on the front chamber side of the cylinder together with pressure oil discharged out of the charge cylinder flows from the passage toward the rear chamber of the cylinder under the pressure on the rear chamber side of the cylinder to reduce the hydraulic resistance in the front chamber of the cylinder.

When the piston moves from the front chamber of the piston and reaches a clamping position, the passage on the front chamber side of the cylinder is connected to a drain, and when the passage is cut off by a valve member to supply pressure oil to only the rear chamber side of the cylinder, pressure oil within the charge cylinder is switched to clamping as it is.

### BRIEF DESCRIPTION OF THE DRAWINGS

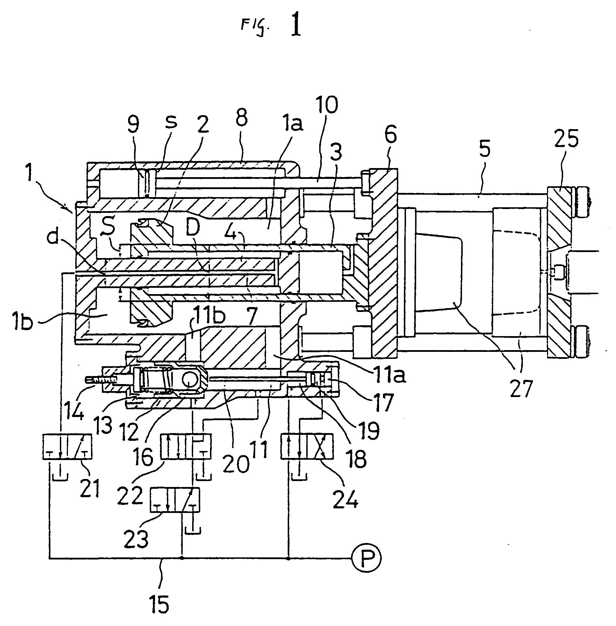

The drawings schematically show a first embodiment of a clamping mechanism in an injection molding machine according to this invention, in which FIG. 1 is a longitudinal sectional side view showing the state in which a mold is opened.
FIG. 2 is a longitudinal sectional side view showing the state in which a mold is closed.
FIG. 3 is a longitudinal sectional end view showing essential parts.
FIG. 4 is a longitudinal sectional side view showing the state in which a mold is opened according to a further embodiment.
FIG. 5 is a longitudial sectional end view of FIG. 4.
FIG. 6 is a longitudinal sectional end view showing another embodiment.

### BEST MODE FOR CARRYING OUT THE INVENTION

In the figures, reference numeral 1 designates a clamping cylinder, in which an internal diameter of a rear chamber 1b of a cylinder is formed to be larger than an internal diameter of a front chamber 1a of the cylinder.

Reference numeral 2 designates a piston formed at the rear end of a clamping ram 3 and having an external diameter adapted for the front chamber 1a of the cylinder. Into the clamping ram 3 is coaxially inserted a booster ram 4 projected in the central portion of the rear chamber 1b of the cylinder.

Pressure receiving areas in front and rear surfaces of the piston 2 are larger in the rear surface by a portion of an end area S of the clamping ram 3 since an external diameter d of the booster ram 4 is smaller than an external diameter D of the clamping ram 3, and the clamping ram 3 is moved forward by a hydraulic force within the clamping cylinder due to a difference in area therebetween.

The clamping ram 3 extends through a side wall of the cylinder and projected externally, and a movable plate 6 which is moved while being guided by a tie bar 5 is connected to the fore end of the clamping ram 3. The booster ram 4 has a hydraulic passage 7.

Reference numeral 8 designates a charge cylinder, which is communicated with the front chamber 1a of the cylinder and is lined with the side of the clamping cylinder 1. A pressure receiving area, that is, a charge area s of a charge piston 9 within the cylinder is formed to be smaller than the end area S of the clamping ram at the back surface of the piston 2, and a piston rod 10 is connected to the movable plate 6 along with the clamping ram 3.

Reference numeral 11 designates a large-diameter passage provided on the side of the cylinder, which passage is provided over the front chamber 1a of the cylinder and a front portion of the rear chamber 1b of the cylinder, and the passage 11 has a passage 11a on the front chamber side of the cylinder and a passage 11b on the rear chamber side of the cylinder so that these passages 11a and 11b can be cut off by a valve member 12 provided on the passage 11b.

The valve member 12 is always biased in a valve-closing direction by means of a spring member 13 to constitute a check valve, the spring member 13 capable of being suitably adjusted in pressure by means of a screw member 14. A flowing hole 16 for pressure oil from a hydraulic circuit 15 is bored in the side of the valve member 12.

The valve member 12 is opened when pressure of the passage 11a on the front chamber side of the cylinder exceeds a spring pressure or by an operating device 17 provided opposedly of the valve member 12. The operating device 17 is composed of a hydraulic cylinder 18 and a rod 20 within a passage connected to a piston 19.

The hydraulic circuit 15 is connected to the hydraulic circuit 7 of the booster ram 4, the passage 11 and the operating device 17 with switching valves 21, 22, 23 and 24 provided.

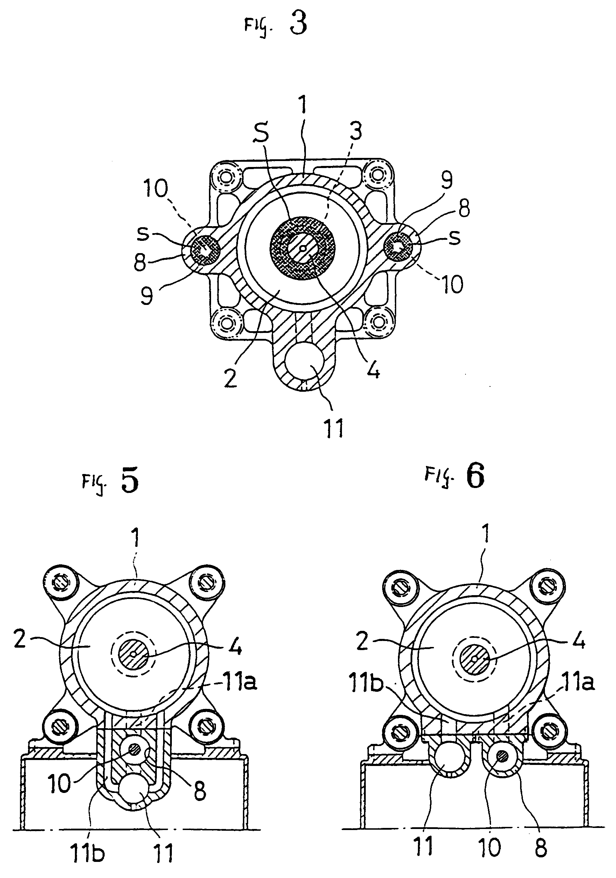

In the figures, reference numeral 25 designates a fixed plate, and 27 is a mold. The charge cylinder 8 is preferably lined on both sides of the clamping cylinder 1 as shown by a sectional view of FIG. 3, in which case, a charge area s (two such areas) need be made smaller than the end area S.

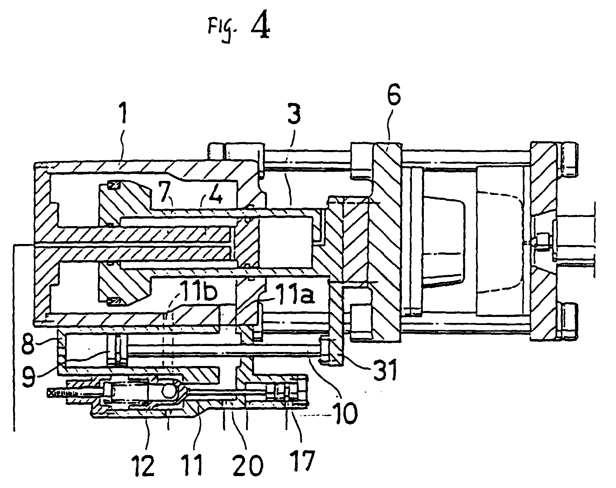

Embodiments shown in FIGS. 4, 5 and 6 uses one charge cylinder 8 described above, which is provided underside of the clamping cylinder 1.

In the embodiments shown in FIGS. 4 and 5, the charge cylinder 8 and the pressure oil passage 11 are provided up and down, respectively, under the clamping cylinder 1, and a piston rod 10 is connected to an arm 31 projectd to the lower side at the fore end of the clamping ram 3. The passage 11a on the front chamber 1a side of the cylinder is made to serve as a passage to communicate the charge cylinder 8 with the front chamber 1a of the cylinder, and the passage 11b on the rear chamber 1b side of the cylinder is provided in the rear chamber 1b of the cylinder from both sides of the charge cylinder 8 as can seen in FIG. 5.

An embodiment shown in FIG. 6 is that the charge cylinder 8 and the passage 11 are provided in parallel with each other under the clamping cylinder 1.

Next, the operation will be described.

In the state in which a mold is opened shown in FIG. 1, when oil pressure is supplied to the cylinder rear chamber 1b, a difference in pressure is generated due to the difference in the pressure receiving area between the front and rear surfaces of the piston and the piston 2 is pressed towards the cylinder front chamber 1a. This pressure causes the clamping ram 5 to urge the movable plate 6 and moves forward, and at the same time, the pressing force is also applied to the piston rod 10. The charge piston 9 integral with the piston 2 moves forward, since the charge area s is smaller than the end area S in which pressure oil exerts on the piston 2, along with the piston 2 due to the difference in area therebetween, to discharge the pressure oil into the cylinder front chamber 1a. The thus discharged pressure oil along with the pressure oil which is present in a moving direction flows out towards the cylinder rear chamber 11b from the flowing clearance, comprising no hydraulic resistance.

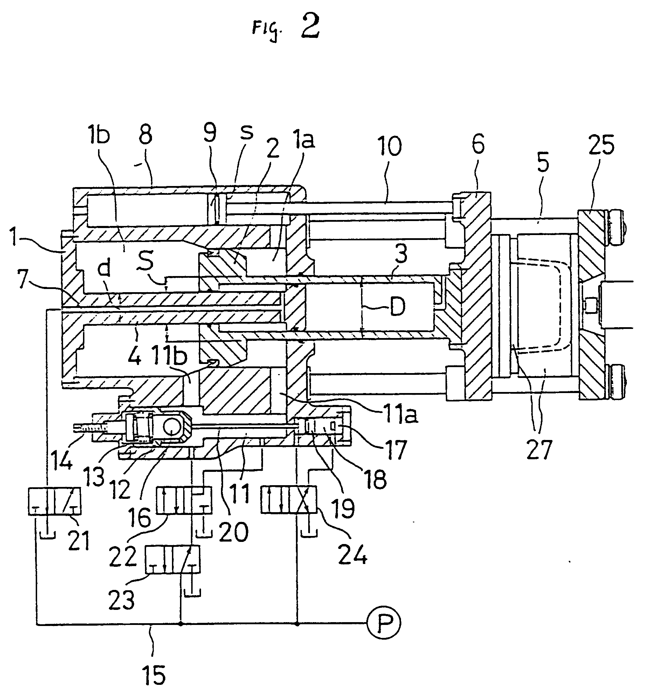

When the front end of the piston 2 reaches the cylinder front chamber 1a, as shown in FIG. 2, the piston 2 is fitted into the cylinder front chamber 1a to lose the flowing clearance. However, at that time, when the operating device 17 is actuated by oil pressure to advance the rod 20 and move backward the valve member 12 against the spring member 13 to open the passage 11, the cylinder front chamber 1a comes into communication with the cylinder rear chamber 1b, and the pressure oil from the charge cylinder 8 along with the pressure oil in the cylinder front chamber 1a flows out towards the cylinder rear chamber 1b, as a result of which no great resistance occurs in the oil pressure in the cylinder front chamber 1a.

Although not shown, when the operating device 17 is hydraulically actuated to return the rod 20 to its original position conversely to the former, the valve member 12 is returned to an equibrium position between the spring pressure and the oil pressure, whereby the passage 11 is drawn to slow-down the mold closing speed. At the time where the forward movement of the piston 2 stops, when the passage 11a on the front chamber side of the cylinder is connected to the drain by the switching valve 22, the oil pressure is lowered and the valve member 12 cuts off the passage 11. Then, the rear chamber side of the cylinder is unilaterally pressurized to assume a clamping state.

After the completion of clamping, the valve member 12 is opened to the FIG. 2 state for opening a mold, and the cylinder front chamber 1a and the cylinder rear chamber 1b are brought into communication with each other through the passage 11, after which pressure oil is supplied to the booster ram 4. Then, the clamping ram 3 along with the movable plate 6 moves backward at high speeds. At the same time, the piston rod 10 also moves backward, and pressure oil of the clamping cylinder 1 is taken into the charge cylinder 8 from the cylinder front chamber 1a. Pressure oil is then stored in the charge cylinder 8 for the succeeding high-speed mold closing.

### INDUSTRIAL AVAILABILITY

According to this invention, a charge cylinder in communication with a cylinder front chamber is provided on the side of a clamping cylinder, and a piston rod of the charge cylinder is moved along with the clamping cylinder so as to store a part of pressure oil within the clamping cylinder in the charge cylinder when a clamping ram advances whereas to discharge the pressure oil from the charge cylinder when the ram moves backward. Therefore, high-speed mold closing can be carried out without occurrence of cavitation merely by supplying a small quantity of pressure oil to the clamping cylinder. The charge cylinder is merely provided on the side to have the piston rod operatively connected to the clamping ram, and therefore, there has many merits as a clamping mechanism such as that the mechanism is simple in construction and particular operation is not necessary. Therefore, the clamping mechanism of this invention may be widely utilized in the molding industry for synthetic resins.

## Claims

1. A clamping mechanism in an injection molding machine comprising a clamping cylinder (1) in which an internal diameter of a rear chamber (1b) of a cylinder is formed to be larger than an internal diameter of a front chamber (1a) of the cylinder, and a flowing clearance is formed between a peripheral wall of the rear chamber (1b) of the cylinder and a piston (2), and said piston (2) having a external diameter adapted for the front chamber (1a) of the cylinder and having a front portion and a rear portion with a clamping ram (3) and a booster ram (4) made to be coaxial with each other, **characterized in** that a charge cylinder (8) provided with a piston rod (10) operatively connected to the clamping ram (3) is provided parallel with the clamping ram (3) on the side of said clamping cylinder (1), said charge cylinder (8) being communicated with the front chamber (1a) of the cylinder, said charge cylinder (8) having a charge area (s) formed to be smaller than end area (S) of the clamping ram (3) in the back of the piston(2), and a part of pressure oil within the cylinder is charged into said charge cylinder (8) according to the movement of the clamping ram(3), said mechanism further comprises a large-diameter passage (11) provided on the side of the clamping cylinder (1) and provided over the front chamber (1a) and a front portion of the rear chamber (1b) of the clamping cylinder (1), a valve member (12) provided on the passage (11) to cut off the passage (11), said valve member (12) being always biased in a valve-closing direction by means of a spring member (13), and an operating device (17) provided opposedly of the valve member (12) and composed of a hydraulic cylinder to open the valve member (12).

2. A clamping mechanism in an injection molding machine according to claim1, **wherein** said booster ram (4) is formed to be smaller in diameter than that of the clamping ram (3); said large-diameter passage (11) is provided over said front chamber (1a) of said cylinder and the rear chamber (1b) of said cylinder, a hydraulic circuit is connected to the rear chamber side of the cylinder of said passage (11), and a valve member (12) is provided to open and close the passage (11) on the front chamber side of the cylinder.

3. A clamping mechanism in an injecion molding machine according to Claims 1 and 2, **wherein** said charge cylinder (8) is provided parallel with the clamping ram (3) on the side of the clamping cylinder (1), and a piston rod (10) of a charge piston (9) is connected to a movable plate (6) and moves along the clamping ram (3).

4. A clamping mechanism in an injection molding machine according to Claim 1 and 2, **wherein** said charge cylinder (8) is mounted underside of the clamping cylinder (1).

5. A clamping mechanism in an injection molding machine according to Claim 1, 2 and 3, **wherein** said piston rod (10) is connected to an arm (31) projected on the lower side at the fore end of the clamping ram (3) and moves along with the clamping ram (3).

6. A clamping mechanism in an injection molding machine according to one of the prededing Claims, **wherein** the spring member (13) can be suitably adjusted in pressure by means of a screw member (14).

7. A clamping mechanism in an injection molding machine according to one of the preceding Claims, **wherein** a flowing hole (16) for pressure oil from a hydraulic circuit (15) is bored in the side of the valve member (12).

8. A Clamping mechanism in an injection molding machine according to one of the prededing Claims, **wherein** the operating device (17) is composed of a hydraulic cylinder (18) and a rod (20) within a passage connected to a piston (19).

## Patentansprüche

1. Zuhaltemechanismus bei einer Spritzgußmaschine, umfassend einen Zuhaltezylinder (1), bei dem ein Innendurchmesser einer hinteren Kammer (1b) eines Zylinders so ausgebildet ist, daß er größer ist als ein Innendurchmesser einer vorderen Kammer (1a) des Zylinders, und ein Strömungsspalt zwischen einer Umfangswand der hinteren Kammer (1b) des Zylinders und einem Kolben (2) gebildet wird, und der Kolben (2) einen für die vordere Kammer (1a) des Zylinders angepaßten Außendurchmesser aufweist und einen vorderen Teil und einen hinteren Teil mit einem Zuhalteplunger (3) und einem Verstärkerplunger (4) aufweist, die koaxial zueinander gemacht worden sind, **dadurch gekennzeichnet**, daß ein Speisezylinder (8), der mit einer in Wirkverbindung mit dem Zuhalteplunger (3) stehenden Kolbenstange (10) versehen ist, parallel zum Zuhalteplunger (3) an der Seite des Zuhaltezylinders (1) vorgesehen ist, wobei der Speisezylinder (8) mit der vorderen Kammer (1a) des Zylinders verbunden ist, wobei der Speisezylinder (8) eine Speisefläche (s) aufweist, die so ausgebildet ist, daß sie kleiner ist als eine Stirnfläche (S) des Zuhalteplungers (3) in der Rückseite des Kolbens (2), und ein Teil des Drucköls im Zylinder entsprechend der Bewegung des Zuhalteplungers (3) in den Speisezylinder (8) gespeist wird, der Mechanismus weiter einen Durchlaß (11) mit großem Durchmesser umfaßt, der an der Seite des Zuhaltezylinders (1) vorgesehen ist und über der vorderen Kammer (1a) und einem vorderen Teil der hinteren Kammer (1b) des Zuhaltezylinders (1) vorgesehen ist, im Durchlaß (11) ein Ventilelement (12) vorgesehen ist, um den Durchlaß (11) zu verschließen, wobei das Ventilelement (12) mittels eines Federelements (13) immer in Ventilschließrichtung vorgespannt ist, und eine Betätigungsvorrichtung (17) gegenüber vom Ventilelement (12) vorgesehen ist und aus einem Hydraulikzylinder zum Öffnen des Ventilelements (12) besteht.

2. Zuhaltemechanismus bei einer Spritzgußmaschine nach Anspruch 1, **bei dem** der Verstärkerplunger (4) so ausgebildet ist, daß er einen kleineren Durchmesser aufweist als derjenige des Zuhalteplungers (3), der Durchlaß (11) mit dem großen Durchmesser über der vorderen Kammer (1) des Zylinders und der hinteren Kammer (1b) des Zylinders vorgesehen ist, ein Hydraulikkreis mit der Seite der hinteren Kammer des Zylinders des Durchlasses (11) verbunden ist, und ein Ventilelement (12) vorgesehen ist, um den Durchlaß (11) auf der Seite der vorderen Kammer des Zylinders zu öffnen und zu schließen.

3. Zuhaltemechanismus bei einer Spritzgußmaschine nach Anspruch 1 und 2, **bei dem** der Speisezylinder (8) parallel zum Zuhalteplunger (3) an der Seite des Zuhaltezylinders (1) vorgesehen ist, und eine Kolbenstange (10) eines Speisekolbens (9) mit einer beweglichen Platte (6) verbunden ist und sich zusammen mit dem Zuhalteplunger (3) bewegt.

4. Zuhaltemechanismus bei einer Spritzgußmaschine nach Anspruch 1 und 2, **bei dem** der Speisezylinder (8) auf der Unterseite des Zuhaltezylinders (1) angebracht ist.

5. Zuhaltemechanismus bei einer Spritzgußmaschine nach Anspruch 1, 2 und 3, **bei dem** die Kolbenstange (10) mit einem Arm (31) verbunden ist, der am vorderen Ende des Zuhalteplungers (3) an der Unterseite übersteht und sich zusammen mit dem Zuhalteplunger (3) bewegt.

6. Zuhaltemechanismus bei einer Spritzgußmaschine nach einem der vorangehenden Ansprüche, **bei dem** das Federelement (13) mittels eines Schraubenelements (14) druckmäßig passend einstellt werden kann.

7. Zuhaltemechanismus bei einer Spritzgußmaschine nach einem der vorangehenden Ansprüche, **bei dem** eine Durchtrittsöffnung (16) für Drucköl aus einem Hydraulikkreis (15) in die Seite des Ventilelements (12) gebohrt ist.

8. Zuhaltemechanismus bei einer Spritzgußmaschine nach einem der vorangehenden Ansprüche, **bei dem** die Betätigungsvorrichtung (17) aus einem Hydraulikzylinder (18) und einer mit einem Kolben (19) verbundenen Stange (20) innerhalb eines Durchlasses besteht.

## Revendications

1. Mécanisme de serrage d'une machine de moulage par injection comprenant un cylindre de serrage (1) dans lequel le diamètre interne d'une chambre arrière (1b) du cylindre est formé de manière à être plus grand que le diamètre interne d'une chambre avant (1a) du cylindre, et un intervalle d'écoulement est formé entre une paroi périphérique de la chambre arrière (1b) du cylindre et un piston (2), ce piston (2) ayant un diamètre externe adapté à celui de la chambre avant (1a) du cylindre et ayant une portion avant et une portion arrière, avec une tige de piston de serrage (3) et une tige de piston d'appoint (4) disposées coaxialement l'une par rapport à l'autre, caractérisé en ce qu'un cylindre de charge (8), pourvu d'une tige de piston (10) connectée opérationnellement à la tige de piston de serrage (3), est disposé, parallèlement à la tige de piston de serrage (3), sur le côté du cylindre de serrage (1), ce cylindre de charge (8) communiquant avec la chambre avant (1a) du cylindre, le cylindre de charge (8) ayant une aire de charge (s) formée de manière à être plus petite qu'une aire (S) de la surface frontale de la tige de piston de serrage (3) à l'arrière du piston (2), et une partie de l'huile sous pression se trouvant dans le cylindre est chargée vers et dans le cylindre de charge (8) en fonction du mouvement de la tige de piston de serrage (3), ce mécanisme comprenant en outre un passage de grand diamètre (11) prévu sur le côté du cylindre de serrage (1) et s'étendant par-dessus la chambre avant (1a) du cylindre de serrage (1) et une portion avant de sa chambre arrière (1b), un clapet (12) prévu dans le passage (11) pour obturer ce passage (11), ce clapet (12) étant toujours sollicité, dans la direction de fermeture du clapet, au moyen d'un ressort (13), et un dispositif d'actionnement (17) prévu à l'opposé du clapet (12) et composé d'un cylindre hydraulique, afin d'ouvrir le clapet (12).

2. Mécanisme de serrage d'une machine de moulage par injection suivant la revendication 1 caractérisé en ce que la tige de piston d'appoint (4) est formée de manière à avoir un diamètre inférieur à celui de la tige de piston de serrage (3), le passage de grand diamètre (11) est prévu par-dessus la chambre avant (1a) du cylindre et la chambre arrière (1b) de ce cylindre, un circuit hydraulique est connecté au côté du passage (11) se trouvant du côté de la chambre arrière (1b) du cylindre et un clapet (12) est prévu pour ouvrir et fermer le passage (11) du côté de la chambre avant (1a) du cylindre.

3. Mécanisme de serrage d'une machine de moulage par injection suivant l'une quelconque des revendications 1 et 2 caractérisé en ce que le cylindre de charge (8) est disposé parallèlement à la tige de piston de serrage (3), sur le côté du cylindre de serrage (1) et une tige de piston (10) du cylindre de charge (8) est connectée à un plateau mobile (6) et elle se déplace conjointement avec la tige de piston de serrage (3).

4. Mécanisme de serrage d'une machine de moulage par injection suivant l'une quelconque des revendications 1 et 2 caractérisé en ce que le cylindre de charge (8) est monté en dessous du cylindre de serrage (1).

5. Mécanisme de serrage d'une machine de moulage par injection suivant l'une quelconque des revendications 1,2 et 3 caractérisé en ce que la tige de piston (10) est connectée à un bras (31) s'étendant sur le côté inférieur, à l'endroit de l'extrémité avant de la tige de piston de serrage (3), et elle se déplace conjointement avec la tige de piston de serrage (3).

6. Mécanisme de serrage d'une machine de moulage par injection suivant l'une des revendications précédentes caractérisé en ce que la pression du ressort (13) peut être ajustée d'une manière appropriée au moyen d'une vis (14).

7. Mécanisme de serrage d'une machine de moulage par injection suivant l'une des revendications précédentes caractérisé en ce qu'un trou d'écoulement (16) pour l'huile sous pression provenant d'un circuit hydraulique (15) est percé dans le côté du clapet (12).

8. Mécanisme de serrage d'une machine de moulage par injection suivant l'une des revendications précédentes caractérisé en ce que le dispositif d'actionnement (17) est composé d'un cylindre hydraulique (18) et d'une tige (20) dans un passage connectée à un piston (19).
